# EUROPÄISCHE PATENTSCHRIFT

(11) **EP 1 066 178 B1**
(45) Veröffentlichungstag und Bekanntmachung des Hinweises auf die Patenterteilung: **15.05.2002**
(21) Anmeldenummer: 99942583.8
(22) Anmeldetag: 20.02.1999
(51) Int. Cl.: B60R 21/00

(54) **VERFAHREN ZUR KAPAZITIVEN OBJEKTERKENNUNG BEI FAHRZEUGEN**
METHOD FOR CAPACITATIVE OBJECT RECOGNITION IN MOTOR VEHICLES
PROCEDE DE DETECTION CAPACITIVE D'OBJETS DANS LES VEHICULES

(30) Priorität: 23.03.1998 DE 19812626
(43) Veröffentlichungstag der Anmeldung: 10.01.2001
(73) Patentinhaber: Bayerische Motoren Werke Aktiengesellschaft, 80809 München (DE)
(72) Erfinder: EISENMANN, Lutz, D-85241 Ampermoching (DE); MARSCHNER, Christian, D-80803 Müchen (DE); GRIESSBACH, Robert, D-83629 Weyarb (DE); LU, Yan, D-85356 Freising (DE)
(86) Internationale Anmeldenummer: EP9901115
(87) Internationale Veröffentlichungsnummer: WO9948727

(56) Entgegenhaltungen:
- WO-A-97/29391
- WO-A-97/47976
- DE-A- 4 417 827
- DE-A- 19 630 769
- DE-U- 29 500 749

## Beschreibung

Die Erfindung bezieht sich auf ein Verfahren gemäß dem Oberbegriff des Patentanspruchs 1.

Verfahren zur kapazitiven Objekterkennung bei Fahrzeugen sind aus verschiedenen Veröffentlichungen, beispielsweise der US 4,796,013 bekannt. Im Prinzip sind die beiden i.d.R. plattenförmigen Elektroden benachbart zu dem jeweiligen Objekt angeordnet. Im Falle einer Belegterkennung für einen Fahrzeugsitz befinden sich die Elektroden in der Polsterung des Sitzes und dort beispielsweise im Sitz- oder Lehnenteil. Die Erkennung wird hier dazu verwendet, Sicherheitseinrichtungen wie Airbag und dgl. nur dann auszulösen, wenn der Sitz tatsächlich besetzt ist.

Es wird die Kapazität des so gebildeten Kondensators gemessen. Bei Anwesenheit einer Person ändert sich die Kapazität des Kondensators aufgrund der relativ guten Leitfähigkeit des Menschen. Dabei ist jedoch problematisch, daß die bekannten Verfahren auf die Fahrzeugmasse bezogen sind. Durch Ableitströme ohm'scher oder kapazitiver Art wird die Kapazitätsmessung stark verfälscht.

Bei praktischen Versuchen hat sich gezeigt, daß der Effekt der Ableitströme den Effekt der Kapazitätsänderung in der Regel bei weitem überwiegt. Erschwerend kommt hinzu, daß die Ableitströme stark von Umgebungsparametern, wie z. B. Feuchtigkeit oder Berührung der Person durch einen anderen Fahrzeuginsassen, abhängig ist. Es treten somit zwei gegensinnig wirkende Effekte auf, wobei der der Ableitströme quantitativ nicht zu fassen ist. Daraus resultiert, daß eine Aussage über die Masse oder das Volumen des auf dem Sitz befindlichen Objekt, also z. B. die Erkennung eines Kindersitzes, kaum möglich ist.

Ein Weg, diese Probleme zu lösen, ergibt sich aus der WO 95/21752 entsprechend US 5,525,843 und der Gattungsbildenden WO 97/29391. Dabei sollen die beiden Elektroden gegenüber der Fahrzeugmasse isoliert sein. Problematisch daran aber ist, daß sich eine vollständige Isolierung nicht erreichen läßt, da zumindest kapazitiv eine Kopplung zwischen der die beiden Elektroden beinhaltenden Meßanordnung und der Fahrzeugmasse immer vorhanden ist. Damit lassen sich auch Fehlerströme nicht vollständig verhindern. Zudem ist der potentialfreie Aufbau einer derartigen Meßanordnung aufwendig.

Der Erfindung liegt die Aufgabe zugrunde, ein Verfahren der eingangs genannten Art zu schaffen, das mit geringem apparativem Aufwand eine genaue Aussage über die Anwesenheit eines Objekts liefert.

Die Erfindung löst diese Aufgabe durch die Merkmale des Patentanspruchs 1.

Bei der Erfindung werden die beiden Elektroden mit gegenphasigen Wechselspannungen betrieben. Die beiden Elektrodenströme kompensieren sich. Dadurch liegt das Objekt zumindest annähernd auf Massepotential, ohne daß es hierfür einer Isolierung bedarf. Ableitströme treten wenn überhaupt nur in geringem Umfang auf. Dadurch ergibt sich, daß das Verfahren gerade durch das eingangs geschilderte Problem der Ableitströme nicht oder zumindest nicht wesentlich beeinflußt wird.

Vorteilhafte Ausgestaltungen der Erfindung sind Gegenstand der weiteren Patentansprüche.

Durch die im Patentanspruch 2 angegebene Maßnahme wird die Gesamtbelastung des Objekts auf Null reduziert und Ableitströme völlig ausgeschlossen. Ausgehend von dem Abgleich der Summe der beiden Kondensatorstöme auf Null bei Abwesenheit eines Objekts wird die Summe gleich Null auch bei Anwesenheit des Objekts eingestellt.

Die im Patentanspruch 3 angegebene Maßnahme ermöglicht, auch die Größe eines Objekts zu erkennen.

Mit der im Patentanspruch 4 angegebenen Maßnahme wird es zusätzlich oder alternativ möglich, die Lage des Objekts bezüglich der beiden Elektroden zu detektieren. Dabei läßt sich auch eine Änderung der Lage und damit auch eine out-of-position" des Objekts erkennen.

Aus der aus der Größe und der Lage des Objekts sich ergebenden Information ist es auch möglich, die Existenz eines Kindersitzes und auch dessen Anordnung in bzw. entgegen der Fahrtrichtung zu erkennen. Damit wird es möglich, beispielsweise Sicherheitseinrichtungen wie einen Airbag und dergleichen entsprechend zu steuern oder aber auch seine Auslösung zu blockieren.

Die im Patentanspruch 5 angegebene Maßnahme bietet die Möglichkeit, die Erkennung eines Objekts hinsichtlich Lage und Größe weiter zu verbessern.

Die Patentansprüche 6 und 7 beschäftigen sich mit der Verbesserung der Richtwirkung. Objekte auf der "anderen" Seite der Elektrode(n) beeinflussen dann das Ergebnis nicht.

Schließlich wird mit den Patentansprüchen 8 und 9 eine Diagnosemöglichkeit geschaffen bzw. die Durchführung der Diagnose quasi kontinuierlich ermöglicht.

Das erfindungsgemäße Verfahren ist anhand der Zeichnung weiter erläutert. Es zeigt
- Fig. 1: eine erste Vorrichtung zur Durchführung des erfindungsgemäßen Verfahrens,
- Fig. 2: eine zweite Vorrichtung zur Durchführung des erfindungsgemäßen Verfahrens mit verbesserter Lageerkennung eines Objekts und
- Fig. 3: eine Diagnosemöglichkeit für das erfindungsgemäße Verfahren.

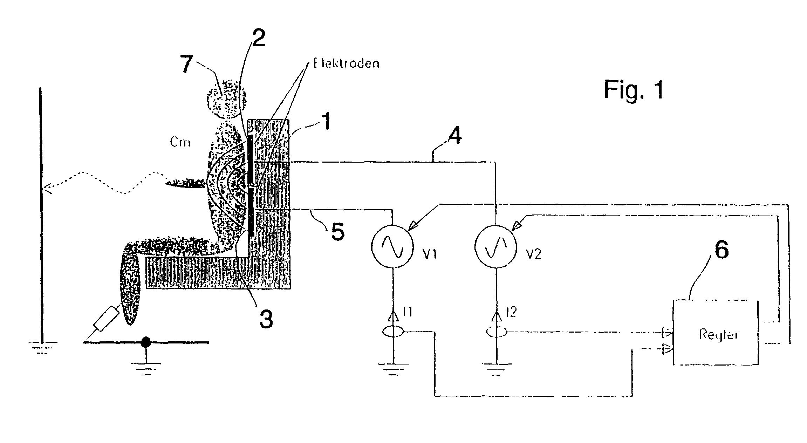

In Figur 1 ist schematisch eine Schaltanordnung in Verbindung mit der konstruktiven Ausgestaltung der Erfindung dargestellt.

In einem schematisch gezeigten Fahrzeugsitz 1 befinden sich Elektroden 2 und 3. die jeweils gegenphasig mit Wechselspannungen V₁ und V₂ beaufschlagt werden. Die in den Zuleitungen 4 und 5 sich ergebenden Wechselströme I₁ und I₂ werden auf einen Regler 6 geführt. Dieser steuert die beiden Wechselströme I₁ und I₂ auf einen entgegengesetzt gleich großen Wert. Der Summenstrom I₁ + I₂ ist damit gleich Null. In der Praxis hat sich ein Stromwert von 3mA bei einer Wechselspannungsfrequenz zwischen 10 und 150kHz, vorzugsweise von 50kHz als zweckmäßig erwiesen.

Gemäß der Kirchhoffschen Regel ergibt sich damit, daß dann auch das zu detektierende Meß-Objekt, hier schematisch als Person 7 dargestellt, Massepotential besitzt. Ableitströme, die beispielsweise beim Berühren eines mit der Fahrzeugmasse verbundenen Fahrzeuggegenstands auftreten können, sind damit eliminiert.

Das Verhältnis der beiden Wechselstromwiderstände V₁ /I₁ und V₂ /I₂ liefert eine Aussage über die Position des Meß-Objekts, die Summe dieser beiden Widerstände ermöglicht einen Rückschluß auf die Größe des Meß-Objekts. Allgemein läßt sich sagen, daß der Wechselstromwiderstand umso kleiner wird, je näher das Objekt an der Elektrode und je größer es ist.

Damit wird eine präzise Aussage über die Anwesenheit, die Größe und die Lage eines Meßobjekts erzielt und gleichzeitig eine elektrische Belastung des Meßobjekts vermieden.

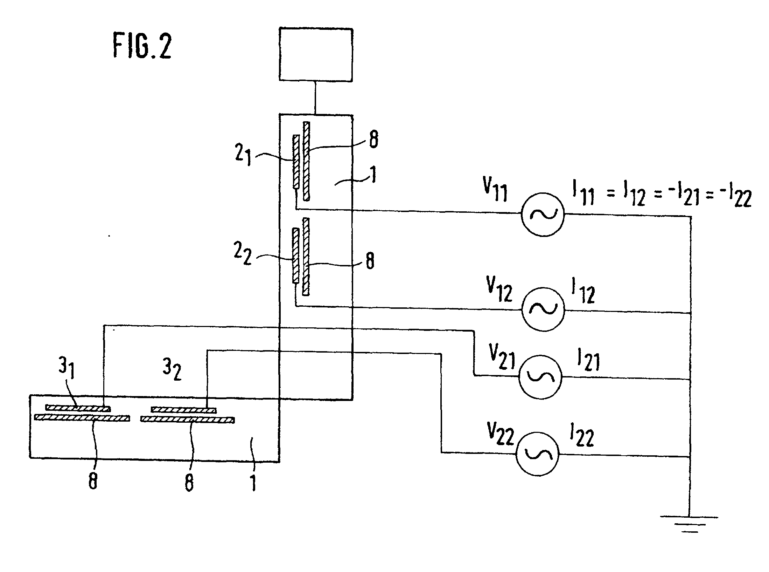

Beim Ausführungsbeispiel von Fig. 2 besteht jede Elektrode 2 und 3 aus zwei Teilelektroden 2₁ und 2₂ bzw. 3₁ und 3₂. Zusätzlich ist jeder Teilelektrode eine Schirmung in Form einer elektrisch leitenden Platte 8 zugeordnet, durch die eine Richtwirkung hin zum Meß-Objekt erzielt wird (vgl. US 5,166,679 A).

Die gleichphasigen Wechselspannungen V₁₁, V₁₂, und die hierzu gegenphasigen Wechselspannungen V₂₁ und V₂₂ werden so eingestellt, daß die Ströme I₁₁ und I₁₂ einerseits und die Ströme I₂₁ und I₂₂ andererseits mit und ohne vorhandenem Meß-Objekt jeweils betragsweise gleich und paarweise entgegengesetzt zueinander sind. Die Änderungen der jeweiligen Wechselstromwiderstände absolut und in Relation zueinander lassen eindeutige Rückschlüsse auf Größe, aktuelle Lage und Ausmaß eines Objekts zu. Damit können nicht dargestellte Sicherheitseinrichtungen bedarfsgerecht aktiviert werden.

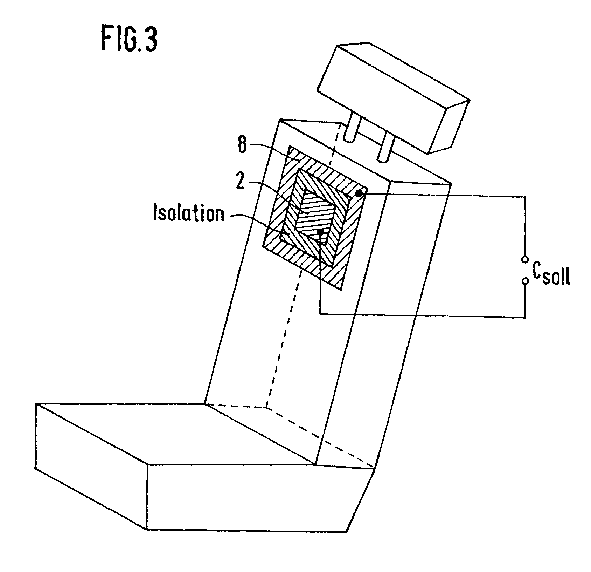

Schließlich zeigt Fig. 3 eine Ergänzung der Erfindung mit einer Diagnose des Systems. Jedes der in Fig. 2 dargestellten Teilsysteme mit einer Teilelektrode 2₁, 2₂, 3₁ oder 3₂, einer Platte 8 und einer Wechselspannungsquelle V₁₁₋₂₂ ist dabei wie gezeigt verschaltet. Dabei wird zu Diagnosezwecken die Kapazität Cₛₒₗₗ zwischen der Teilelektrode und der davon isolierten Platte 8 bestimmt. Entspricht diese Kapazität einem Sollwert, ist das Teilsystem in Ordnung. Diese Diagnose wird für jedes Teilsystem einzeln und abwechselnd mit der beschriebenen Objekt-Erkennung vorgenommen. Die Diagnose der Teilsysteme erfolgt zyklisch.

Durch die funktionelle Verbindung von Meßbetrieb und Diagnose steht ein zuverlässiges System zur Objekt-Erkennung zur Verfügung.

## Patentansprüche

1. Verfahren zur kapazitiven Objekterkennung bei Fahrzeugen, bei der zwei Kondensatorelektroden (2, 3) mit Wechselspannung (V₁, V₂) beaufschlagt werden und die Anwesenheit eines Objekts (7) durch eine Änderung der *Kapazität* eines Kondensators bemerkt wird, wobei die beiden Elektroden (2, 3) *Bestandteil von jeweils gegenüber der Fahrzeugmasse ausgebildeten Kondensatoren sind und* separat mit zwei Wechselspannungen (V₁, V₂) beaufschlagt werden, die gegenphasig zueinander sind, **dadurch gekennzeichnet, daß** die Elektroden (2, 3) mit Wechselspannungen (V₁, V₂) derart separat beaufschlagt werden, *daß sich die in den Zuleitungen (4, 5) der beiden Elektroden (2,3) ergebenden Wechselströme (I*_{*1*}*,I*_{*2*}*) kompensieren,* wozu diese Wechselströme addiert werden.

2. Verfahren nach Anspruch 1, **dadurch gekennzeichnet, daß** die beiden Wechselspannungen (V₁, V₂) auch bei Anwesenheit eines Objekts (7) in ihrer Amplitude so eingestellt werden, daß die Summe der beiden Wechselströme (I₁,I₂) gleich Null ist.

3. Verfahren nach Anspruch 1 oder 2, **dadurch gekennzeichnet, daß** die Größe des Objekts (7) durch Summation der beiden Wechselstromwiderstände (V₁/I₁, V₂/I₂) bestimmt wird.

4. Verfahren nach einem der Ansprüche 1 bis 3, **dadurch gekennzeichnet, daß** die Lage des Objekts (7) aus dem Verhältnis der Wechselstromwiderstände (V₁/I₁, V₂/I₂) bestimmt wird.

5. Verfahren nach einem der Ansprüche 1 bis 4 **dadurch gekennzeichnet, daß** mindestens eine Elektrode (2, 3) aus zwei Teilelektroden (2₁, 2₂, 3₁, 3₂) besteht, die über separate Zuleitungen gleichphasig mit Wechselspannung beaufschlagt werden.

6. Verfahren nach einem der Ansprüche 1 bis 5, **dadurch gekennzeichnet, daß** eine elektrische Wechselwirkung der Elektroden zu der vom Objekt (7) abgewandten Seite hin durch eine elektrische Schirmung verhindert wird.

7. Verfahren nach Anspruch 6, **dadurch gekennzeichnet, daß** die Schirmung durch eine parallele elektrisch leitfähige Platte (8) für jede Elektrode (2,3) erzielt wird.

8. Verfahren nach Anspruch 6 oder 7, **dadurch gekennzeichnet, daß** zur Diagnose von aus Elektrode, Schirmung und zugehörigen Zuleitungen bestehenden Untersystemen die Kapazität zwischen Elektrode und Schirmung bestimmt wird.

9. Verfahren nach Anspruch 8, **dadurch gekennzeichnet, daß** die Diagnose abwechselnd mit der Objekterkennung durchgeführt wird.

## Claims

1. A method of capacitive object recognition in vehicles, wherein two capacitor electrodes (2, 3) are supplied with AC voltage (V₁, V₂) and the presence of an object (7) is detected via a change in the capacitance of a capacitor, wherein the two electrodes (2, 3) are components of respective capacitors relative to vehicle earth and are separately supplied with two AC voltages (V₁, V₂) in phase opposition, **characterised in that** the electrodes (2, 3) are separately supplied with AC voltages (V₁, V₂) such that the resulting AC current (I₁, I₂) in the leads (4, 5) of the two electrodes (2, 3) compensate one another, to which end the said AC currents are added.

2. A method according to claim 1, **characterised in that** the two AC voltages (V₁, V₂) are so adjusted in amplitude, even in the presence of an object (7), that the sum of the two AC currents (I₁, I₂) is zero.

3. A method according to claim 1 or 2, **characterised in that** the size of the object (7) is determined by summing the two AC resistances (V₁/I₁, V₂/I₂).

4. A method according to any of claims 1 to 3, **characterised in that** the position of the object (7) is determined from the ratio between the AC resistances (V₁/I₁, V₂/I₂).

5. A method according to any of claims 1 to 4, **characterised in that** at least one electrode (2, 3) comprises two component electrodes (2₁, 2₂, 3₁, 3₂) supplied with AC voltage in phase via separate leads.

6. A method according to any of claims 1 to 5, **characterised in that** an electric screen prevents electric interaction between the electrodes on the side remote from the object (7).

7. A method according to claim 6, **characterised in that** the screen is in the form of a parallel electrically conductive plate (8) for each electrode (2, 3).

8. A method according to claim 6 or 7, **characterised in that** the capacitance between the electrodes and the screen is determined in order to diagnose sub-systems comprising an electrode, the screen and associated leads.

9. A method according to claim 8, **characterised in that** the diagnosis is performed alternately with object recognition.

## Revendications

1. Procédé de détection capacitive d'objets dans des véhicules selon lequel on alimente deux électrodes de condensateur (2, 3) avec une tension alternative (V₁, V₂) et on perçoit la présence d'un objet (7) par une variation de la capacité d'un condensateur, selon lequel les deux électrodes (2, 3) font partie de condensateurs réalisés chaque fois en regard de la masse du véhicule et sont alimentées séparément par deux tensions alternatives (V₁, V₂) en opposition de phase,
**caractérisé en ce que**
les électrodes (2, 3) reçoivent séparément des tensions alternatives (V₁, V₂) pour que les courants alternatifs (I₁, I₂) qui en résultent dans les lignes d'alimentation (4, 5) des deux électrodes (2, 3) se compensent et pour cela ces courants alternatifs sont additionnés.

2. Procédé selon la revendication 1,
**caractérisé en ce que**
les deux tensions alternatives (V₁, V₂) ont une amplitude réglée même en présence d'un objet (7) pour que la somme des deux courants alternatifs (I₁, I₂) soit égale à zéro.

3. Procédé selon les revendications 1 ou 2,
**caractérisé en ce que**
la taille de l'objet (7) se détermine à partir de la somme des deux résistances de courants alternatifs (V₁/I₁, V₂/I₂).

4. Procédé selon l'une quelconque des revendications 1 à 3,
**caractérisé en ce que**
la position de l'objet (7) se détermine à partir du rapport des résistances de courants alternatifs (V₁/I₁, V₂/I₂).

5. Procédé selon l'une quelconque des revendications 1 à 4,
**caractérisé en ce qu'**
au moins une électrode (2, 3) est formée de deux électrodes partielles (2₁, 2₂, 3₁, 3₂) alimentées par des lignes séparées, en phase avec une tension alternative.

6. Procédé selon l'une quelconque des revendications 1 à 5,
**caractérisé en ce que**
par un blindage électrique, on évite l'interaction électrique des électrodes vers l'objet (7) du côté opposé.

7. Procédé selon la revendication 6,
**caractérisé en ce qu'**
on réalise le blindage par une plaque (8) conductrice électrique, parallele pour chaque électrode (2, 3).

8. Procédé selon la revendication 6 ou 7,
**caractérisé en ce que**
pour le diagnostic des électrodes, du blindage et des lignes correspondantes formant des sous-systèmes, on protège la capacité entre l'électrode et l'écran.

9. Procédé selon la revendication 8,
**caractérisé en ce que**
le diagnostic est effectué en alternance avec la détection d'objet.
